(19) Europäisches Patentamt
European Patent Office
Office européen des brevets

(11) **EP 4 432 003 A1**

(12) **EUROPEAN PATENT APPLICATION**
published in accordance with Art. 153(4) EPC

(43) Date of publication:
**18.09.2024  Bulletin 2024/38**

(21) Application number: **23778561.3**

(22) Date of filing: **29.03.2023**

(51) International Patent Classification (IPC):
***G02F 1/01*** *(2006.01)*

(52) Cooperative Patent Classification (CPC):
**G02F 1/01**

(86) International application number:
**PCT/ES2023/070206**

(87) International publication number:
**WO 2023/187241 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.03.2022  ES 202230286**

(71) Applicant: **Peta Optik S.L.**
**20004 San Sebastian (Gipuzkoa) (ES)**

(72) Inventor: **PATERNOTTRE ECHEVERRÍA, Aquiles**
**28016 Madrid (ES)**

(74) Representative: **Pons**
**Glorieta Rubén Darío 4**
**28010 Madrid (ES)**

(54) **TELECOMMUNICATION SYSTEM BASED ON SPATIAL MULTIPLEXING OF OPTICAL CHANNELS**

(57)     Telecommunications system based on of spatial multiplexing of optical channels, employing Optical Space Connected Modulation (OSCM), for establishing optical telecommunications links, where multiple optical communication channels are established with a single optical, wherein the system comprises:
- An OSCM transmitter system (1) comprising:
◦ A data input port (3)
◦ An OSCM modulator system (4), comprising
  ▪ A processor system (5),
  ▪ A spatial modulator (7)

◦ A generic light source (8)
◦ An optical transmitter system (10)

- A communication channel (11)
- An OSCM receiver system (2) containing
◦ An optical receiver system (12)
◦ An OSCM demodulator system (14), comprising
  ▪ An image sensor (13)
  ▪ A processor system (15)

    The system allows multiple transmission channels to be set up with a single optic,

FIG.1

## Description

### PURPOSE OF THE INVENTION

The object of the present invention is, as the title of the invention states, a telecommunications system based on spatial multiplexing of optical channels, using Optical Space Connected Modulation (OSCM), to establish wireless optical telecommunications links.

The present invention is characterised by the architecture of the transmitter and receiver systems to obtain a design that allows increased energy efficiency per transmitted bit and higher bit/sec capacities than what can be currently achieved in optical telecommunications links. The modulation in these systems is produced by the pixels of an optical spatial modulator which may be a screen, a projector, a Spatial Light Valve (SLV), a Grating Light Valve (GLV), a set of light sources (each light source would be equivalent to a pixel), or other devices that have pixels in a spatial configuration, in which the symbols that are transmitted in the link are modulated.

The present invention therefore falls within the field of optical telecommunications systems.

### BACKGROUND TO THE INVENTION

In the optical telecommunication links currently in use, the light source that emits the light carrying the information is located at the focus of a transmitting optical system. And the photodetector that receives the light and transforms it into an electrical signal from which the information is extracted is located at the focus of the receiving optical system. As both the light source in the transmitter and the photodetector are located at the focus points, which are single points, and therefore there can only be one light source and one photodetector if there is only one transmitting and receiving optical system.

The capacity of telecommunication systems is given by the Shannon-Hartley formula which indicates that the capacity of the C-channel is:

$$C = B \ x \ log_2(1 + S/N)$$

where:

- B is the channel bandwidth in Hertz.
- C is the channel capacity (bit rate of information bit(s)).
- S is the power of the electrical signal at the receiver after demodulation, which may be expressed in watts, milliwatts, etc., (W, mW, etc.).
- N is the noise power added to the electrical signal at the receiver, expressed in the same units as the signal power, S, caused by physical phenomena at the transmitter, channel and receiver.

To increase the capacity of a telecommunications link there are two fundamental ways, increasing B, and multiplexing several channels to send information in parallel. The bandwidth available in the channel, B, depends on the geometry, the material the channel is made of and the clock speed of the electronic circuits. Much progress has been made in improving these factors to obtain higher B values, but the effort required to go further down this route is increasing. Multiplexing a very large number of channels by multiplying the number of systems required by the number of channels is a much less scalable solution than the solution proposed by this invention.

The object of the present invention is to develop a multiple optical channel telecommunications system with multiple transmitters and multiple receivers using common optics for all channels, so that establishing a multiplex of optical channels is more scalable than with current solutions, and which has the characteristics described in the "Disclosure of the Invention" below and essentially set out in the first claim.

A search for possible predecessors has been carried out. The closest that has been found is an article "A Pixelated MIMO Wireless Optical Communication System" in the IEEE Journal of Selected Topics in Quantum Electronics, vol. 12, no. 4, July/August 2026. The fundamental differences with the present invention is that the cited article does not contemplate any optics in the transmitter system which is a key element of OSCM systems, as stated in the first claim.

### DISCLOSURE OF THE INVENTION

The object of the present invention is a telecommunications system based on spatial multiplexing, i.e. in space, of optical channels. The optical modulators/demodulators modulate/demodulate the light of each channel of the multiplex of channels at different points in space which are called pixels. The system comprises a transmitter and a receiver both of the OSCM type by having modulators and demodulators that have pixels.

The information is transmitted by generating an optical image from the spatial modulator of the transmitter onto an array of photodetectors, similar to an image sensor but with fewer and faster pixels, located in the receiver. For this purpose, an optical system similar to a telescope is used with an optical system acting as an objective and there may be another optical system acting as an eyepiece. In the receiver's photodetectors, with the image of the spatial modulator formed on them, the changes produced by the modulation of the light in each of the pixels of the spatial modulator of the transmitter are detected and this allows the information to be extracted.

OSCM links are referred to as "connected" because the radiation emitted by each of the channels present in the link may overlap with that of other channels on its journey from the transmitter to the receiver, forming two-dimensional "connected" surfaces by observing the power distribution of each channel in the cross sections of the propagation of the information, but it is still possible to recover the information. These surfaces are referred to as "OSCM multiplex power surfaces".

The telecommunications system that is the object of the invention comprises:

- An OSCM transmitter system containing:

    ○ A data input port to the OSCM link that receives the bits to be transmitted.
    ○ An OSCM modulator system, which has:

        ▪ A processor system, which receives the bits from the controller at the data input port to the link, maps the bits to symbols and generates the electrical signals necessary to produce the appropriate symbol as light passes through the screen.
        ▪ The spatial modulator in which the symbols to be transmitted are modulated.

    ○ A generic light source that generates a beam of light which, as it passes through the screen in whose pixels each of the channels is modulated, generates the symbols to be transmitted in the resulting optical signal.
    ○ An optical transmitting system whose function is to maximise the signal power in the OSCM modulated optical channel multiplex to the OSCM receiving system. It may consist of a system with lenses, mirrors, prism systems, diffraction gratings, numerical aperture limiters, diaphragms or diffusers, or combinations thereof.

- A communication channel.

- An OSCM receiver system containing:

    ○ An optical receiving system whose function is, to create the screen image of the OSCM modulator system on the image sensor of the OSCM demodulator system. It may consist of a system with lenses, mirrors, prism systems, diffraction gratings, numerical aperture limiters, diaphragms or diffusers, or combinations thereof.
    ○ An OSCM demodulator system, which has:

        ▪ An image sensor, which receives the optical signal, and extracts the communication symbols into electrical signals that are sent to a processor system.
        ▪ A processor system, which receives electrical signals from the image sensor as each of the symbols is received in a time sequence, and de-maps those symbols into bits that are delivered to the controller at the data output port of the OSCM link.

The reason why this OSCM link architecture is proposed is because the capacity of the OSCM channels is:

$$C = B \, x \, \left(\frac{S}{N}\right) x \, log_2 e \, \frac{bit}{s}$$

Compared to the Shannon-Hartley capacity formula mentioned above in the "Background of the Invention", the OSCM formula provides clear benefits to the increase in signal power compared to the Shannon-Hartley formula where the signal power is within a logarithm and increases in signal power are not linearly producing capacity increases. This increase in the capacity of communications links is the need that the invention satisfies. With the OSCM technique the power consumption per transmitted bit is optimal.

The OSCM capacity equation linear with ($\frac{S}{N}$) when the number of channels of the OSCM multiplex, M, meets with $M \gg \left(\frac{S}{N}\right)$. This is achieved by increasing the number of pixels in the transmitter modulator and the number of photodiodes in the receiver.

Achieving a number $M \gg \left(\frac{S}{N}\right)$ in wireless OSCM links is straightforward because it will consist of increasing the number of pixels in the spatial modulator of the transmitter and the number of photodetectors in the receiver. And form the image of the spatial modulator of the transmitter on the photodetectors of the receiver.

In the state of the art when wireless channels are used for optical transmission of information there must be perfect alignment, a fact that limits their use, however, with the proposed OSCM system perfect alignment is not required, but pointing is sufficient. The alignment required in today's wireless optical telecommunication systems is produced by placing the foci of the transmitting and receiving optical systems and the centres of both optical systems on a single line, which is a very strict condition. The pointing, however, refers to the fact that optical systems have a field of view which is the maximum angle of incidence of the light rays hitting the receiver photodetector array, the larger the field of view the more the receiver can move relative to the emitter without losing the formation of the spatial modulator image on the receiver photodetector array, thus being able to transmit information, the pointing condition is therefore less stringent.

In OSCM links, the radiation from each pixel of the spatial modulator is received on the receiver photodetector array in pixel arrays that are distinct for each transmitting pixel. Establishing a multiplex of OSCM channels.

The maximum number of channels of an OSCM multiplex if there are N pixels transmitting and M receiving, is the minimum value of the pair (M, N).

It is usually desirable to have more pixels in the reception because in imaging, the size of the images cannot be arbitrarily adjusted, it depends on physics, and it is then very difficult to image each pixel of the spatial modulator in a single pixel at the receiver.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises", and its variants do not intend to exclude other technical characteristics, additives, components, or steps. For persons skilled in the art, other purposes, advantages, and characteristics of the invention will be partly inferred from the description and partly from the practical application of the invention.

## EXPLANATION OF THE FIGURES

In order to complement the description being made herein, and with the purpose of aiding a better understanding of the characteristics of the invention, in accordance with a preferred practical embodiment thereof, a set of drawings is accompanied as an integral part of said description, in an illustrative and nonlimiting manner, the following has been represented:

Figure 1 shows a general schematic of the telecommunications system based on spatial multiplexing of optical channels according to the invention.

Figure 2 shows a schematic of the transmitting and receiving optical systems and the optical signal carrying the information transmitted from the transmitting optical system to the receiving optical system.

## PREFERRED EMBODIMENT OF THE INVENTION

With reference to the figures, a preferred embodiment of the proposed invention is described below.

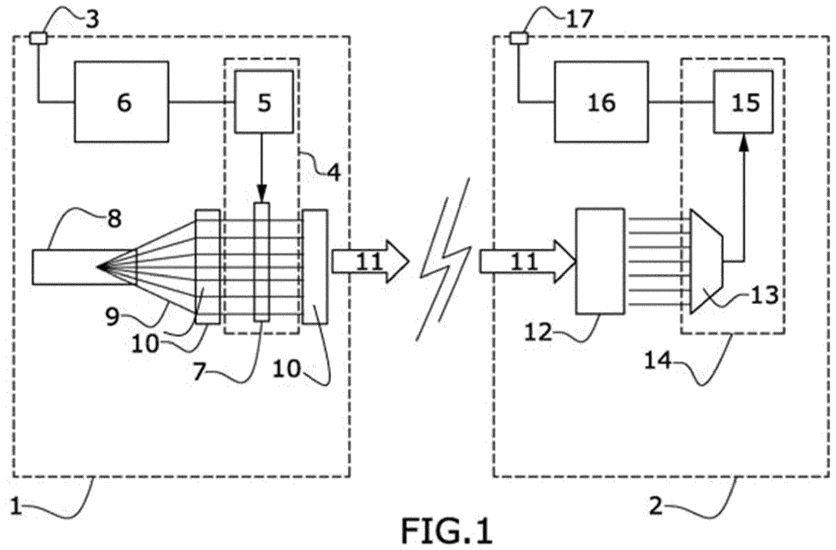

Figure 1 shows the telecommunications system which is the subject of the invention and which comprises:

- An OSCM transmitter system (1) comprising:

  ∘ A data input port (3) to the OSCM transmitter system (1), which receives bits to be transmitted.
  ∘ An OSCM modulator system (4), comprising:

    ▪ A processor system (5), which receives the bits to be transmitted from a controller (6) connected to the data input port (3) to the link, responsible for mapping the bits to symbols and generating electrical signals necessary to produce the appropriate symbol.
    ▪ A spatial modulator (7) containing a series of pixels in which the symbols to be transmitted are modulated.

  ∘ A generic light source (8) that generates a beam of light (9) which, when passing through the pixels of the spatial modulator (7), will produce a modulation of each of the channels, generating the symbols to be transmitted.
  ∘ An optical transmitter system (10) whose function is to maximise the signal power in the multiplex of OSCM modulated optical channels to the OSCM receiver system (2); and, in some cases, to diffract the light before illuminating the screen so that each pixel is illuminated and modulates different wavelengths. It may consist of a system with lenses, mirrors, prism systems, diffraction gratings, numerical aperture limiters, diaphragms or diffusers, or combinations thereof.

- A communication channel (11) which may be wireless or waveguided.
- An OSCM receiver system (2) containing:

  ∘ An optical receiver system (12) whose function is to create an image of the OSCM spatial modulator (7) on an image sensor (13); or, if a diffraction technique has been used in the transmitting optical system, to diffract the received light signal in order to project it onto the image sensor (13) in an orderly manner according to its wavelengths. It may consist of a system with lenses, mirrors, prism systems, diffraction gratings, numerical aperture limiters, diaphragms or diffusers, or combinations thereof.
  ∘ An OSCM demodulator system (14), comprising:

    ▪ The image sensor (13) that receives the optical signal from the optical receiver system (12) and extracts the communication symbols into electrical signals that are sent to a processor system (15).
    ▪ The processor system (15) is designed to receive the electrical signals from the image sensor (13) in a time sequence for each of the symbols, and produces a de-mapping process of those symbols to bits which are delivered to a controller (16) of an output port (17) of the OSCM receiver system (2) data.

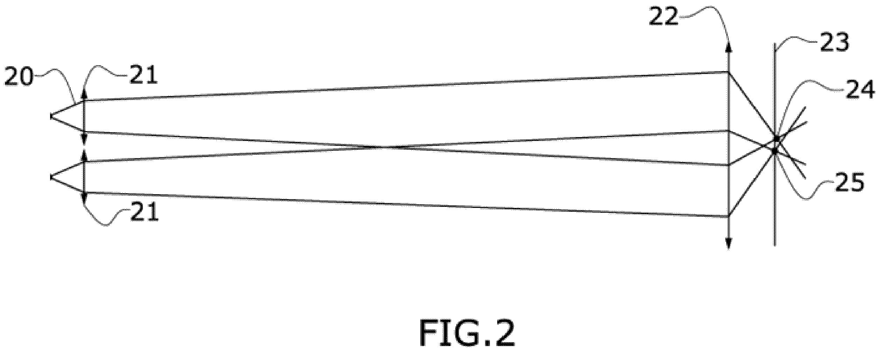

Figure 2 shows a condenser optic in the transmitting optical system that projects light into the receiving optical system to form an image of the pixels of the transmitting system modulated on a photodetector array, thus making the communication effective. The elements in the figure are:

- A pair of pixels modulated with the information signal (18) and (19). There may be more pixels, but only two are shown for clarity of the figure. The pixels are placed closer to the lenses (21) than their focal point so that the beam is not completely collimated and does not travel from transmitter to receiver.
- The beams travel from the modulated pixels (18) and (19) experiencing a larger aperture angle at the exit of the source and decreasing in aperture angle as they pass through the lenses (21).
- A transmitting optical system consisting of a condensing optical system using convergent optical systems (21), which may consist of one or more components, mirrors, lenses, etc.
- A receiving optical system which is a convergent optical system (22), which may consist of one or more components, mirrors, lenses, etc.; and whose function is to form an image of the modulated pixels (18) and (19) on the image sensor (23).
- The image of pixel (18) on the image sensor is (24). What is transmitted at (18) is received at (24).
- The image of pixel (19) on the image sensor is (25). What is transmitted at (18) is received at (25).

**Claims**

1. Telecommunications system based on spatial multiplexing of optical channels **characterised in that** it comprises:

   • An OSCM transmitter system (1) comprising:

   ◦ A data input port (3) to the OSCM transmitter system (1), which receives bits to be transmitted.
   ◦ An OSCM modulator system (4), comprising:

      ▪ A processor system (5), which receives the bits to be transmitted from a controller (6) connected to the data input port (3) to the link, responsible for mapping the bits to symbols and generating electrical signals necessary to produce the appropriate symbol.
      ▪ A spatial modulator (7) containing a series of pixels in which the symbols to be transmitted are modulated.

   ◦ A generic light source (8) that generates a beam of light (9) which, when passing through the pixels of the spatial modulator (7), will produce a modulation of each of the channels, generating the symbols to be transmitted.

   ◦ An optical transmitter system (10) whose function is to maximise the signal power in the OSCM modulated optical channel multiplex to the OSCM receiver system (2).

   • A communication channel (11).
   • An OSCM receiver system (2) containing:

   ◦ An optical receiver system (12) whose function is to create an image of the OSCM spatial modulator (7) on an image sensor (13); or, if a diffraction technique has been used in the transmitting optical system, to diffract the received light signal in order to project it onto the image sensor (13) in an orderly manner according to its wavelengths.
   ◦ An OSCM demodulator system (14), comprising:

      ▪ An image sensor (13) that receives the optical signal from the optical receiver system (12), and extracts the communication symbols into electrical signals that are sent to a processor system (15).
      ▪ The processor system (15) is designed to receive the electrical signals from the image sensor (13) in a time sequence for each of the symbols, and produces a de-mapping process of those symbols to bits which are delivered to a controller (16) of an output port (17) of the OSCM receiver system (2) data.

2. Telecommunications system based on spatial multiplexing of optical channels according to claim 1, **characterised in that** the optical transmitter system (10) consists of a condenser optical system (14) for sending the highest signal power to the receiver and optionally of a boost system, for use in wireless links.

3. Telecommunications system based on spatial multiplexing of optical channels according to claim 1 or 2 **characterised in that** the optical receiver system (12) consists of a convergent optical system **characterised in that** its main function is to form images (24) and (25) of the modulated pixels (18) and (19) of the transmitting system onto the image sensor (16) of the receiving system.

4. Telecommunications system based on spatial multiplexing of optical channels according to any of the preceding claims, **characterised in that** the optical receiver system (12) consists of a convergent optical system with optical lens function, and optionally with one or more downstream lenses to magnify or de-magnify the image, for use in wireless optical links.

5. Telecommunications system based on spatial multiplexing of optical channels according to any one of the preceding claims, **characterised in that** the optical transmitter system (10) and the optical receiver system (12) consist of a system with lenses, mirrors, prism systems, diffraction gratings, numerical aperture limiters, diaphragms or diffusers, or combinations thereof.

FIG.1

FIG.2

# EP 4 432 003 A1

<table>
<tr><td colspan="2" align="center"><strong>INTERNATIONAL SEARCH REPORT</strong></td><td>International application No.<br>PCT/ES2023/070206</td></tr>
</table>

**A. CLASSIFICATION OF SUBJECT MATTER**

*G02F1/01* (2006.01)

According to International Patent Classification (IPC) or to both national classification and IPC

**B. FIELDS SEARCHED**

Minimum documentation searched (classification system followed by classification symbols)
G02F

Documentation searched other than minimum documentation to the extent that such documents are included in the fields searched

Electronic data base consulted during the international search (name of data base and, where practicable, search terms used)

EPODOC, INVENES, WPI, NPL, XPESP, XPAIP, XPI3E, INSPEC.

**C. DOCUMENTS CONSIDERED TO BE RELEVANT**

| Category* | Citation of document, with indication, where appropriate, of the relevant passages | Relevant to claim No. |
|---|---|---|
| A | WO 02082166 A2 (CIDRA CORP) 17/10/2002, the whole document. | 1-5 |
| A | WO 2020236900 A1 (SILICON LIGHT MACHINES CORP) 26/11/2020, the whole document. | 1-5 |
| A | WO 2008045654 A2 (NORTHROP GRUMMAN CORP ET AL.) 17/04/2008, the whole document. | 1-5 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search<br>23/06/2023 | Date of mailing of the international search report<br>**(27/06/2023)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>J. Botella Maldonado<br><br>Telephone No. |

Form PCT/ISA/210 (second sheet) (July 2022)

## INTERNATIONAL SEARCH REPORT

Information on patent family members

International application No.

PCT/ES2023/070206

| Patent document cited in the search report | Publication date | Patent family member(s) | Publication date |
|---|---|---|---|
| WO02082166 A2 | 17.10.2002 | US2004008401 A1 | 15.01.2004 |
| | | US7126740 B2 | 24.10.2006 |
| | | US2003184843 A1 | 02.10.2003 |
| | | US6956687 B2 | 18.10.2005 |
| | | US2003174939 A1 | 18.09.2003 |
| | | US6934069 B2 | 23.08.2005 |
| | | US2002176149 A1 | 28.11.2002 |
| | | US2002176151 A1 | 28.11.2002 |
| | | US7019883 B2 | 28.03.2006 |
| | | WO02082165 A2 | 17.10.2002 |
| | | WO02082165 A3 | 30.10.2003 |
| | | EP1386193 A2 | 04.02.2004 |
| | | EP1386192 A2 | 04.02.2004 |
| | | CA2443664 A1 | 17.10.2002 |
| | | CA2443356 A1 | 17.10.2002 |
| WO2020236900 A1 | 26.11.2020 | US2020371344 A1 | 26.11.2020 |
| | | US11579439 B2 | 14.02.2023 |
| WO2008045654 A2 | 17.04.2008 | DE112007002368 B4 | 03.09.2009 |
| | | DE112007002368 B9 | 20.02.2014 |
| | | US2008084605 A1 | 10.04.2008 |
| | | US7436588 B2 | 14.10.2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Pixelated MIMO Wireless Optical Communication System. *IEEE Journal of Selected Topics in Quantum Electronics,* vol. 12 (4